# EUROPEAN PATENT APPLICATION

(11) **EP 4 376 177 A1**
(43) Date of publication of application: **29.05.2024**
(21) Application number: 23200505.8
(22) Date of filing: 28.09.2023
(51) Int. Cl.: H01M 50/107, H01M 50/152, H01M 50/148, H01M 50/167, H01M 50/179, H01M 50/188, H01M 50/193, H01M 50/342, H01M 50/536, H01M 50/538, H01M 50/545, H01M 50/566, H01M 50/581, H01M 50/583

(54) **SECONDARY BATTERY**

(30) Priority: 04.10.2022 KR 20220126042
(71) Applicant: Samsung SDI Co., Ltd., Yongin-si, Gyeonggi-do 17084 (KR)
(72) Inventor: KO, Sung Gwi, 17084 Yongin-si (KR); PARK, Gun Gue, 17084 Yongin-si (KR); AHN, Jeong Chull, 17084 Yongin-si (KR); JUNG, Hyun Ki, 17084 Yongin-si (KR)
(74) Representative: Marks & Clerk LLP

(57) **Abstract**

Provided is a battery provided with a collector plate including a fuse part that blocks current if short circuit or overcurrent occurs. For example, disclosed is a battery including an electrode assembly including a positive electrode plate, a separator, and a negative electrode plate, a case accommodating the electrode assembly, and electrically connected to the negative electrode plate, a rivet terminal electrically connected to the positive electrode plate, and embedded in a bottom surface of the case, a cap plate sealing an upper portion of the case, and a positive electrode collector plate below the electrode assembly, and including a terminal connection part connected to the rivet terminal, an electrode plate connection part connected to the positive electrode plate, and a fuse part between the terminal connection part and the electrode plate connection part.

## Description

### BACKGROUND

### 1. Field

Various embodiments of the present disclosure relate to a secondary battery.

### 2. Description of the Related Art

A secondary battery is a power storage system that provides suitable energy density to change electrical energy into chemical energy to thereby store the chemical energy. If compared to non-rechargeable primary batteries, secondary batteries are rechargeable, and are widely used for IT devices, such as smartphones, cellular phones, laptops, tablet PCs, and the like. Recently, interests in electric vehicles have increased to reduce or prevent environmental pollution, and thus, high-capacity secondary batteries are being adopted for the electric vehicles. Such secondary batteries are required to have characteristics, such as high density, high output, and stability.

The above-described information disclosed in the technology that serves as the background of the present disclosure is only for improving understanding of the background of the present disclosure and thus may include information that does not constitute the related art.

### SUMMARY

Aspects of some embodiments of the present disclosure provide a cylindrical secondary battery provided with a collector plate including a fuse part that blocks or reduces current if a short circuit or overcurrent occurs.

According to some embodiments, a battery includes an electrode assembly including a positive electrode plate, a separator, and a negative electrode plate, a case accommodating the electrode assembly, and electrically connected to the negative electrode plate, a rivet terminal electrically connected to the positive electrode plate, and embedded in a bottom surface of the case, a cap plate sealing an upper portion of the case, and a positive electrode collector plate below the electrode assembly, and including a terminal connection part connected to the rivet terminal, an electrode plate connection part connected to the positive electrode plate, and a fuse part between the terminal connection part and the electrode plate connection part.

The fuse part may define a fuse hole along a portion of an outer circumference of the terminal connection part, and may include a connection part electrically connecting the terminal connection part to the electrode plate connection part.

The connection part may have a width of about 3 mm to about 5 mm.

The fuse hole may have a width of about 1 mm to about 4 mm.

An angle of the connection part with respect to a center of the positive electrode collector plate may be between about 60 degrees to about 100 degrees.

A ratio of a radius of the terminal connection part to a radius of the positive electrode collector plate may be between about 1/7 to about 1/5.

The positive electrode collector plate may define a cutoff part outside the fuse part and having a horseshoe shape.

The fuse part may further define a protrusion hole at each end of the fuse hole, the protrusion holes protruding toward each other.

The fuse part may further define an extension hole extending from each end of the fuse hole toward an outside of the positive electrode collector plate, the extension holes extending substantially in parallel.

The fuse part may define one or more fuse holes, concentrically located with respect to a center of the positive electrode collector plate.

The terminal connection part may have a thickness that is greater than a thickness of the electrode plate connection part.

The terminal connection part may protrude upwardly from the electrode plate connection part.

The fuse part may define a fuse hole along a portion of an outer circumference of the terminal connection part, and may include a connection part that is inclined, and that electrically connects the terminal connection part to the electrode plate connection part.

The rivet terminal may include a head below a bottom part of the case, and a coupling part extending from a center of the head toward an interior of the case.

The coupling part may be welded to the terminal connection part.

The bottom part of the case may define a terminal hole through which the rivet terminal passes, wherein an upper end of the coupling part has a diameter that is greater than a diameter of the terminal hole, and wherein a lower end of the coupling part has a diameter that is less than the diameter of the terminal hole.

The battery may further include a first gasket between the coupling part and the bottom part of the case at the terminal hole.

A lower end of the first gasket may extend between the bottom part of the case and the head.

The battery may further include an insulation member between the head and the bottom part of the case.

The battery may further include a first gasket between the coupling part and the bottom part of the case at the terminal hole, wherein the insulation member contacts an outer circumference of the first gasket.

An outer circumference of the insulation member may extend beyond a perimeter of the head.

The case may further include a beading part recessed from a lower portion of the cap plate toward an interior of the case, and a crimping part bent from an upper portion of the cap plate toward the interior of the case.

The cap plate may include a first area above the electrode assembly, a second area outside the first area, and protruding upwardly further than the first area, and a third area that is inclined, and that connects the first area to the second area.

A vent may be provided in the first area.

The second area may be between the beading part and the crimping part.

The battery may further include a second gasket between the second area and the case, and contacting an inside of the beading part and the crimping part.

An end of the second gasket between the cap plate and the crimping part may extend toward the interior of the case further than an end of the crimping part.

An end of the second gasket between the cap plate and the beading part may protrude toward the interior of the case further than the beading part.

The battery may further include a negative electrode collector plate above the electrode assembly, and including a planar part to which the negative electrode plate is connected, and an extension part bent upwardly from the planar part.

The extension part may be electrically connected to the beading part.

The planar part may define a through-hole.

At least some of the above and other features of the invention are set out in the claims.

### BRIEF DESCRIPTION OF DRAWINGS

The accompanying drawings are included to provide a further understanding of the present disclosure, and are incorporated in, and constitute a part of, this specification. The drawings illustrate embodiments of the present disclosure and, together with the description, explain aspects of the present disclosure. In the drawings:
FIG. 1 illustrates a perspective view of a cylindrical secondary battery according to one or more embodiments;
FIG. 2 illustrates a cross-sectional view of the cylindrical secondary battery of FIG. 1;
FIG. 3A illustrates a plan view of a positive electrode collector plate in the cylindrical secondary battery of FIG. 1;
FIG. 3B illustrates a cross-sectional view of a positive electrode collector plate in the cylindrical secondary battery of FIG. 1;
FIGS. 4 to 9 illustrate plan views of a positive electrode collector plate according to various embodiments; and
FIG. 10 illustrates a graph showing results of a short circuit simulation of external resistance (5 mΩ) of a positive electrode collector plate according to one or more embodiments; and
FIG. 11 illustrates a graph showing results of a short circuit simulation of external resistance (5 mΩ) of a positive electrode collector plate according to various embodiments.

### DETAILED DESCRIPTION

Aspects of some embodiments of the present disclosure and methods of accomplishing the same may be understood more readily by reference to the detailed description of embodiments and the accompanying drawings. The described embodiments are provided as examples so that this disclosure will be thorough and complete, and will fully convey the aspects of the present disclosure to those skilled in the art. Accordingly, processes, elements, and techniques that are redundant, that are unrelated or irrelevant to the description of the embodiments, or that are not necessary to those having ordinary skill in the art for a complete understanding of the aspects of the present disclosure may be omitted. Unless otherwise noted, like reference numerals, characters, or combinations thereof denote like elements throughout the attached drawings and the written description, and thus, repeated descriptions thereof may be omitted.

The described embodiments may have various modifications and may be embodied in different forms, and should not be construed as being limited to only the illustrated embodiments herein. The present disclosure covers all modifications, equivalents, and replacements within the idea and technical scope of the present disclosure. Further, each of the features of the various embodiments of the present disclosure may be combined or combined with each other, in part or in whole, and technically various interlocking and driving are possible. Each embodiment may be implemented independently of each other or may be implemented together in an association.

In the drawings, the relative sizes of elements, layers, and regions may be exaggerated for clarity and/or descriptive purposes. Additionally, the use of cross-hatching and/or shading in the accompanying drawings is generally provided to clarify boundaries between adjacent elements. As such, neither the presence nor the absence of cross-hatching or shading conveys or indicates any preference or requirement for particular materials, material properties, dimensions, proportions, commonalities between illustrated elements, and/or any other characteristic, attribute, property, etc., of the elements, unless specified.

Various embodiments are described herein with reference to sectional illustrations that are schematic illustrations of embodiments and/or intermediate structures. As such, variations from the shapes of the illustrations as a result, for example, of manufacturing techniques and/or tolerances, are to be expected. Further, specific structural or functional descriptions disclosed herein are merely illustrative for the purpose of describing embodiments according to the concept of the present disclosure. Thus, embodiments disclosed herein should not be construed as limited to the illustrated shapes of elements, layers, or regions, but are to include deviations in shapes that result from, for instance, manufacturing.

Spatially relative terms, such as "beneath," "below," "lower," "lower side," "under," "above," "upper," "upper side," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below," "beneath," "or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. Similarly, when a first part is described as being arranged "on" a second part, this indicates that the first part is arranged at an upper side or a lower side of the second part without the limitation to the upper side thereof on the basis of the gravity direction.

Further, the phrase "in a plan view" means when an object portion is viewed from above, and the phrase "in a schematic cross-sectional view" means when a schematic cross-section taken by vertically cutting an object portion is viewed from the side. The terms "overlap" or "overlapped" mean that a first object may be above or below or to a side of a second object, and vice versa. Additionally, the term "overlap" may include layer, stack, face or facing, extending over, covering, or partly covering or any other suitable term as would be appreciated and understood by those of ordinary skill in the art. The expression "not overlap" may include meaning, such as "apart from" or "set aside from" or "offset from" and any other suitable equivalents as would be appreciated and understood by those of ordinary skill in the art. The terms "face" and "facing" may mean that a first object may directly or indirectly oppose a second object. In a case in which a third object intervenes between a first and second object, the first and second objects may be understood as being indirectly opposed to one another, although still facing each other.

It will be understood that when an element, layer, region, or component is referred to as being "formed on," "on," "connected to," or "(operatively or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. For example, when a layer, region, or component is referred to as being "electrically connected" or "electrically coupled" to another layer, region, or component, it can be directly electrically connected or coupled to the other layer, region, and/or component or intervening layers, regions, or components may be present. However, "directly connected/directly coupled," or "directly on," refers to one component directly connecting or coupling another component, or being on another component, without an intermediate component. In addition, in the present specification, when a portion of a layer, a film, an area, a plate, or the like is formed on another portion, a forming direction is not limited to an upper direction but includes forming the portion on a side surface or in a lower direction. On the contrary, when a portion of a layer, a film, an area, a plate, or the like is formed "under" another portion, this includes not only a case where the portion is "directly beneath" another portion but also a case where there is further another portion between the portion and another portion. Meanwhile, other expressions describing relationships between components such as "between," "immediately between" or "adjacent to" and "directly adjacent to" may be construed similarly. In addition, it will also be understood that when an element or layer is referred to as being "between" two elements or layers, it can be the only element or layer between the two elements or layers, or one or more intervening elements or layers may also be present.

For the purposes of this disclosure, expressions such as "at least one of," or "any one of," or "one or more of" when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XYY, YZ, and ZZ, or any variation thereof. Similarly, the expression such as "at least one of A and B" and "at least one of A or B" may include A, B, or A and B. As used herein, "or" generally means "and/or," and the term "and/or" includes any and all combinations of one or more of the associated listed items. For example, the expression such as "A and/or B" may include A, B, or A and B. Similarly, expressions such as "at least one of," "a plurality of," "one of," and other prepositional phrases, when preceding a list of elements, modify the entire list of elements and do not modify the individual elements of the list.

It will be understood that, although the terms "first," "second," "third," etc., may be used herein to describe various elements, components, regions, layers and/or sections, these elements, components, regions, layers and/or sections should not be limited by these terms. These terms do not correspond to a particular order, position, or superiority, and are used only used to distinguish one element, member, component, region, area, layer, section, or portion from another element, member, component, region, area, layer, section, or portion. Thus, a first element, component, region, layer or section described below could be termed a second element, component, region, layer or section, without departing from the scope of the present disclosure. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

The terminology used herein is for the purpose of describing particular embodiments only and is not intended to be limiting of the present disclosure. As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

When one or more embodiments may be implemented differently, a specific process order may be performed differently from the described order. For example, two consecutively described processes may be performed substantially at the same time or performed in an order opposite to the described order.

As used herein, the term "substantially," "about," "approximately," and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

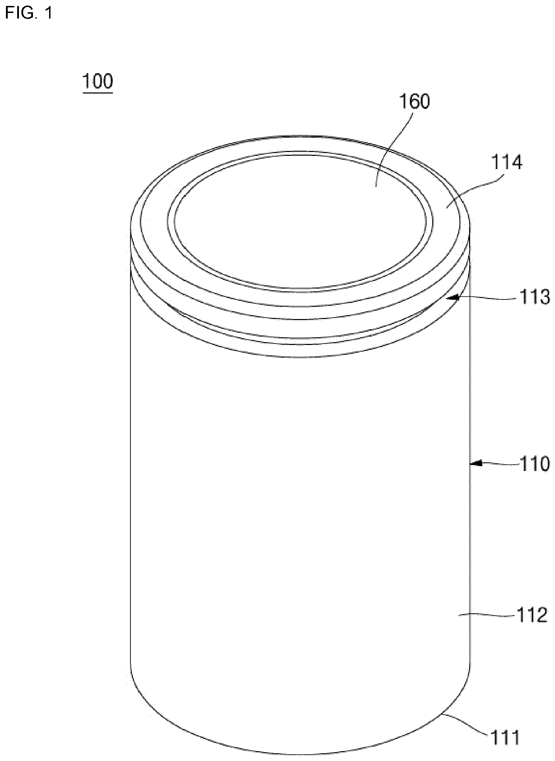

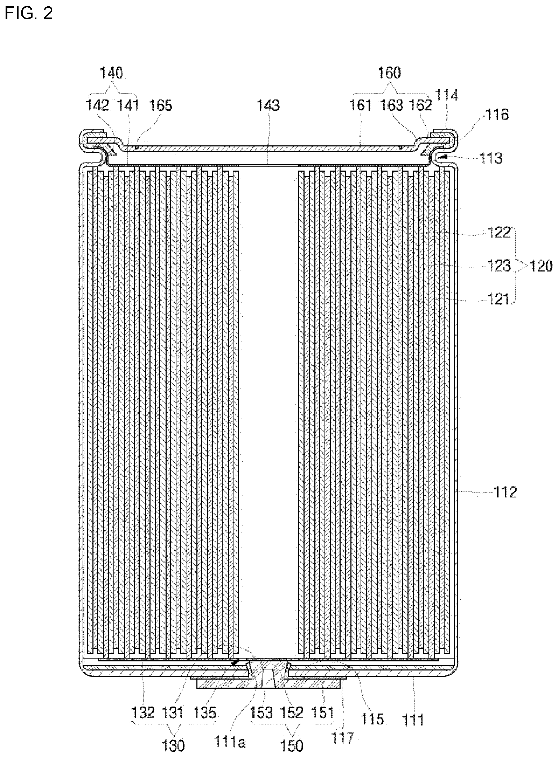

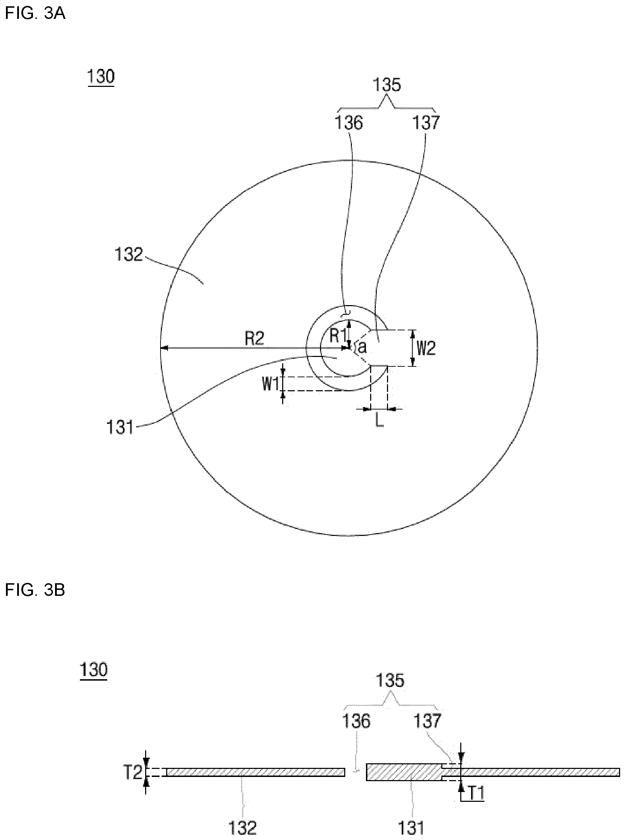

FIG. 1 illustrates a perspective view of a cylindrical secondary battery according to one or more embodiments, and FIG. 2 illustrates a cross-sectional view of the cylindrical secondary battery of FIG. 1. FIG. 3A illustrates a plan view of a positive electrode collector plate in the cylindrical secondary battery of FIG. 1, and FIG. 3B illustrates a cross-sectional view of a positive electrode collector plate in the cylindrical secondary battery of FIG. 1.

Referring to FIGS. 1 and 2, a secondary battery (e.g., a cylindrical secondary battery) 100 according to one or more embodiments includes a case 110, an electrode assembly 120, a positive electrode collector plate 130, a negative electrode collector plate 140, a rivet terminal 150, and a cap plate 160.

The case 110 may include a bottom part (e.g., a circular bottom part) 111, and a side part 112 extending by a length (e.g., a predetermined length) upwardly from an edge of the bottom part 111. The bottom part 111 and the side part 112 of the case 110 may be integrated with each other.

The bottom part 111 may have a flat circular plate shape, and may be provided with (e.g., may define) a terminal hole 111a passing through a central portion thereof. The bottom part 111 may be coupled by inserting a rivet terminal 150 into the terminal hole 111a. A first gasket 115 for sealing and for electrical insulation may be further interposed between the terminal hole 111a and the rivet terminal 150. The first gasket 115 may be inserted into the terminal hole 111a, and may extend to a lower portion of the bottom part 111. The first gasket 115 may block contact between the rivet terminal 150 and the case 110 to electrically separate, or insulate, the rivet terminal 150 from the case 110. The terminal hole 111a of the bottom part 111 of the case 110 may be sealed by the first gasket 115. The first gasket 115 may be made of a resin material, such as polyethylene (PE), polypropylene (PP), polyethylene terephthalate (PET), or the like.

In the secondary battery 100, an upper portion of the case 110 may be opened during a manufacturing process. In one or more embodiments, during the process of manufacturing the secondary battery 100, the electrode assembly 120 may be inserted together with an electrolyte through the opened upper portion of the case 110. After the electrolyte and the electrode assembly 120 are inserted into the case 110, the cap plate 160 may be coupled to the opened upper portion to seal the case 110. In one or more embodiments, the electrolyte may serve to enable movement of lithium ions between the positive electrode plate 121 (e.g., a first electrode plate) and a negative electrode plate (e.g., a second electrode plate) 122 that constitute the electrode assembly 120. The electrolyte may be a non-aqueous organic electrolyte that is a mixture of lithium salt and a high-purity organic solvent. Furthermore, the electrolyte may be a polymer using a polymer electrolyte or a solid electrolyte, and the type of the electrolyte is not limited here.

The case 110 may be made of steel, a steel alloy, aluminium, an aluminium alloy, or an equivalent thereof, but the material thereof is not limited thereto. In one or more embodiments, a beading part 113 recessed inwardly and located below the cap plate 160, and a crimping part 114 bent inwardly and located above the cap plate 160, may be provided in the case 110 to reduce or prevent the likelihood of the electrode assembly 120 being separated to the outside. The beading part 113 and the crimping part 114 may reduce or prevent the likelihood of the cap plate 160 being separated from the case 110.

The electrode assembly 120 includes the positive electrode plate 121, the negative electrode plate 122, and a separator 123. In one or more embodiments, the positive electrode plate 121 may be, instead, a negative electrode plate, and the negative electrode plate 122 may be, instead, a positive electrode plate.

The positive electrode plate 121 may be provided by applying a positive electrode active material, such as transition metal oxide on a positive electrode collector made of metal foil, such as aluminium (Al). A positive electrode non-coating portion that is an area on which the positive electrode active material is not applied may be provided on a portion of the positive electrode plate 121. The positive electrode non-coating portion may protrude downwardly from the electrode assembly 120. That is, the positive electrode non-coating portion of the positive electrode plate 121 may protrude downwardly further than the negative electrode plate 122 and the separator 123.

The negative electrode plate 122 may be provided by applying a negative electrode active material, such as graphite or carbon on a negative electrode collector made of metal foil, such as copper (Cu) or nickel (Ni). A negative electrode non-coating that is an area on which the negative electrode active material is not applied may be provided on a portion of the negative electrode plate 122. In one or more embodiments, the negative electrode non-coating portion of the negative electrode plate 122 may protrude upwardly further than the positive electrode plate 121 and the separator 123.

The separator 123 may be made of polyethylene (PE) or polypropylene (PP), but the present disclosure is not limited thereto. The separator may reduce or prevent the likelihood of the electrical short between the positive electrode plate 121 and the negative electrode plate 122 to thereby allow only the lithium ions to move.

The electrode assembly 120 may be wound from a winding front end in a substantially cylindrical shape after the positive electrode plate 121, the negative electrode plate 122, and the separator 123 are stacked. In one or more embodiments, in the electrode assembly 120, the positive electrode non-coating portion that is not coated with the positive electrode active material may protrude downwardly from the positive electrode plate 121, and the negative electrode non-coating portion that is not coated with the negative electrode active material may protrude upwardly from the negative electrode plate 122.

The positive electrode collector plate 130 may be a circular metal plate having a shape corresponding to a bottom surface of the electrode assembly 120. An area (or size) of the positive electrode collector plate 130 may be equal to or less than an area (or size) of a top surface of the electrode assembly 120. The positive electrode collector plate 130 may be made of aluminium (Al). The positive electrode collector plate 130 may be fixed and electrically connected to the positive electrode plate 121 exposed to the lower side of the electrode assembly 120 through welding in a state in which the top surface of the positive electrode collector plate 130 is in contact with the bottom surface of the electrode assembly 120. The positive electrode collector plate 130 may be fixed and electrically connected to the rivet terminal 150 through welding in a state in which the bottom surface of the positive electrode collector plate 130 is in contact with the top surface of the rivet terminal 150. The positive electrode collector plate 130 may serve as a passage for a current flow between the positive electrode plate 121 of the electrode assembly 120 and the rivet terminal 150.

Referring to FIGS. 3A and 3B, the positive electrode collector plate 130 includes a terminal connection part 131, an electrode plate connection part 132, and a fuse part 135. The terminal connection part 131 may be located at or near a center of the positive electrode collector plate 130, and may be provided in a substantially circular shape. A coupling part 152 of the rivet terminal 150 may be welded to a bottom surface of the terminal connection part 131. An area (or size) of the terminal connection part 131 may be greater than an area (or size) of the coupling part 152. In one or more embodiments, a diameter of the terminal connection part 131 may be greater than that of the coupling part 152. A ratio of a radius R1 of the terminal connection part 131 to a radius R2 of the positive electrode collector plate 130 may be about 1/7 to about 1/5. For example, if the ratio of the radius R1 of the terminal connection part 131 to the radius R2 of the positive electrode collector plate 130 is less than about 1/7, it may be more difficult to weld the coupling part 152 of the rivet terminal 150, and if the ratio of the radius R1 of the terminal connection part 131 to the radius R2 of the positive electrode collector plate 130 is greater than about 1/5, the area of the electrode plate connection part 132 may be reduced so that it is more difficult to weld the positive electrode non-coating portion of the positive electrode plate 121. In some examples, a thickness T1 of the terminal connection part 131 may be thicker than a thickness T2 of the electrode plate connection part 132. Therefore, if the rivet terminal 150 is welded to the terminal connection part 131, the likelihood of the terminal connection part 131 being deformed may be reduced or prevented.

The electrode plate connection part 132 may be located outside the terminal connection part 131, and may be electrically connected to the positive electrode plate 121 of the electrode assembly 120. In one or more embodiments, the positive electrode non-coating portion of the positive electrode plate 121, which protrudes downwardly from the electrode assembly 120, may be welded to the top surface of the electrode plate connection part 132.

The fuse part 135 is located between the terminal connection part 131 and the electrode plate connection part 132. The fuse part 135 may include/define a fuse hole 136, and may include a connection part 137. The fuse part 135 may block current flowing through the secondary battery 100 by melting and cutting the connection part 137 due to generated heat if a short circuit or overcurrent occurs in the secondary battery 100.

The fuse hole 136 may be provided to be substantially C-shaped along a portion of an outer circumference of the terminal connection part 131, and ends of the fuse hole 136 may face each other. The fuse hole 136 may separate the terminal connection part 131 from the electrode plate connection part 132. In one or more embodiments, the terminal connection part 131 and the electrode plate connection part 132 may be spaced apart from each other, or separated from each other, by the fuse hole 136. A width W1 of the fuse hole 136 may be about 1 mm to about 4 mm (e.g., may be about 2 mm). The width W1 of the fuse hole 136 may define, or may correspond to, a length L of the connection part 137.

The connection part 137 may connect the terminal connection part 131 to the electrode plate connection part 132. If the short circuit or overcurrent occurs in the secondary battery 100, the connection part 137 may be melted and cut by generated heat to block current, thereby improving safety of the secondary battery 100. A width W2 of the connection part 137 may be about 3 mm to about 5 mm (e.g., about 4 mm). The width W2 of the connection part 137 may refer to a length between one end and the other end of the fuse hole 136. For example, if the width W2 of the connection part 137 is narrower than about 3 mm, a distance between the ends of the fuse hole 136 may be such that the ends are too close to each other, and may result in damage or breakage even with a relatively small impact. If the width W2 of the connection part 137 is wider than about 5 mm, a cross-sectional area through which the current flows may become relatively large, and thus, the connection part 137 may not be cut due to heat caused by the short circuit or overcurrent, and thereby may fail to function as a fuse.

In one or more embodiments, an angle "a" that is angled by the connection part 137 with respect to the center of the positive electrode collector plate 130 may be about 60 degrees to about 100 degrees. For example, if the angle "a" of the connection part 137 with respect to the center of the positive electrode collector plate 130 is less than about 60 degrees, the distance between the ends of the fuse hole 136 may be too small such that damage or breakage may occur even with a relatively small impact. If the angle "a" of the connection part 137 with respect to the center of the positive electrode collector plate 130 is greater than about 100 degrees, the cross-sectional area through which the current flows may become relatively large, and thus, the connection part 137 may not be cut by the heat caused by a short circuit or overcurrent, and thereby may fail to function as a fuse.

The negative electrode collector plate 140 may include a planar part (e.g., a circular planar part) 141 corresponding to the top surface of the electrode assembly 120, and an extension part 142 extending upwardly from an edge of the planar part 141. A bottom surface of the planar part 141 may be in contact with the top surface of the electrode assembly 120. The bottom surface of the planar part 141 may be fixed and electrically connected to the negative electrode plate 122 exposed to the upper side of the electrode assembly 120 by welding during a state of being in contact with the top surface of the electrode assembly 120. In one or more embodiments, a through-hole 143 may be defined in the planar part 141. At least one through-hole 143 may be defined in the planar part 141. In some examples, the through-hole 143 may be a passage through which the electrolyte injected into the case 110 moves, or through which an internal gas moves.

The extension part 142 may be bent from an edge of the planar part 141 to extend upwardly. The extension part 142 may be in contact with, and may be coupled to the beading part 113 of the case 110. In one or more embodiments, the extension part 142 may be provided in a round shape to correspond to the beading part 113. For example, the extension part 142 may be coupled through welding during a state of being in contact with an inner surface of the beading part 113 of the case 110. In one or more embodiments, the second gasket 116 may be located above the extension part 142 to electrically insulate the negative electrode collector plate 140 from the cap plate 160. In one or more embodiments, the extension part 142 may be provided in plurality to be spaced apart from each other along the edge of the planar part 141. The negative electrode collector plate 140 may be a current flow path between the negative electrode plate 122 of the electrode assembly 120 and the case 110. In one or more embodiments, the case 110 may be a negative electrode terminal.

The rivet terminal 150 may be inserted into the terminal hole 111a provided in the bottom part 111 of the case 110, and may be electrically connected to the positive electrode collector plate 130. That is, the rivet terminal 150 may be a positive electrode terminal. The rivet terminal 150 and the case 110 may have different polarities. The rivet terminal 150 may be made of a material that is the same as, or similar to, that of each of the positive electrode collector plate 130 and the positive electrode plate 121. In the rivet terminal 150, each of a diameter of a portion of the rivet terminal 150 that is exposed to a lower side of the case 110, and a diameter located inside the case 110, may be greater than that of the rivet terminal 150, which is located in the terminal hole 111a.

The rivet terminal 150 may include a head 151 exposed to the lower side of the case 110, and may include a coupling part 152 located inside the case 110 and coupled to the positive electrode collector plate 130. The rivet terminal 150 may be coupled to (e.g., fixed within) the terminal hole 111a of the case 110 from the outside to the inside. In one or more embodiments, the head 151 may be located outside the case 110. In one or more embodiments, the coupling part 152 may be compressed and deformed (e.g., compressed and molded) by riveting, and thus may be pressed in a state in which the first gasket 115 is located in an upper portion of the bottom part 111. In one or more embodiments, the coupling part 152 may have a diameter that gradually increases from the terminal hole 111a (e.g., from a bottom of the terminal hole 111a) toward the inside of the case. In one or more embodiments, a diameter of an upper end of the coupling part 152 may be greater than that of a lower end thereof. In one or more embodiments, the lower end of the coupling part 152 may refer to a portion connected to the head 151. The diameter of the upper end of the coupling part 152 may be greater than that of the terminal hole 111a, and the diameter of the terminal hole 111a may be greater than that of the lower end of the coupling part 152. In one or more embodiments, the head 151 may be in close contact with the lower portion of the bottom part 111 with the first gasket 115 therebetween. In one or more embodiments, a first gasket 115 may be interposed between the rivet terminal 150 and the terminal hole 111a. The rivet terminal 150 may be electrically connected to the positive electrode plate 121 of the electrode assembly 120 through the positive electrode collector plate 130.

In addition, an insulation member 117 may be further located between the head 151 and the bottom part 111 of the case 110. In one or more embodiments, the head 151 may be located below the lower portion of the bottom part 111, and the insulation member 117 that blocks or reduces electrical contact between the rivet terminal 150 and the case 110 may be interposed in an area on which the head 151 and the bottom part 111 overlap each other on the plane. A diameter of the insulation member 117 may be greater than that of the head 151. Thus, an outer circumference (or end) of the insulation member 117 may extend to the outside of the head 151, and may be exposed.

The first gasket 115 may be interposed between the coupling part 152 and the terminal hole 111a of the case 110, and a lower end of the first gasket 115 may extend between the head 151 and the bottom part 111 of the case 110. In one or more embodiments, an end of the lower end of the first gasket 115 may be in contact with the insulation member 117. In one or more embodiments, the first gasket 115 and an insulation member 117 may be interposed between the rivet terminal 150 and the bottom part 111 of the case 110 to electrically insulate the rivet terminal 150 from the case 110 to seal the case 110. In one or more embodiments, the first gasket 115 and the insulation member 117 may be integrated with each other.

The rivet terminal 150 may further include, or define, a welding groove 153 having a depth (e.g., a predetermined depth) from a bottom surface of the head 151 toward the coupling part 152. In one or more embodiments, the welding groove 153 may pass through a central portion of the head 151, and may be provided above a lower portion of the coupling part 152. A thickness of the coupling part 152 may be reduced by the welding groove 153 so that the coupling rivet terminal 150 and the positive electrode collector plate 130 are easily welded to each other at the outside of the case 110.

In some examples, the rivet terminal 150 may omit the welding groove 153. In one or more embodiments, the thickness of the coupling part 152 may be thicker than that of the head 151.

The cap plate 160 may be provided as a circular metal plate, and may be coupled to an upper end of the case 110. A top surface of the cap plate 160 may be exposed to the outside. The cap plate 160 may be coupled to the upper end of the case 110 in a state in which the second gasket 116 is properly located to reduce or prevent the likelihood of electrical connection to the case 110. Because the cap plate 160 is not electrically connected to the positive electrode or the negative electrode of the electrode assembly 120, there may be no separate electrical polarity.

The cap plate 160 may include a first area 161 located above the negative electrode collector plate 140, a second area 162 located outside the first area 161, and a third area 163 located between the first area 161 and the second area 162. The first area 161 may be located at or near a center of the cap plate 160, and may have a relatively large area. The second area 162 may protrude upwardly further than the first area 161. The second area 162 may be located between the beading part 113 and the crimping part 114 of the case 110, and may be coupled to the case 110. The third area 163 may be inclined or bent to connect the first area 161 and the second area 162, which have different respective heights. The second area 162 may be fixed while being located between the beading part 113 and the crimping part 114 of the case 110. In one or more embodiments, in a state in which the second gasket 116 is located above the beading part 113 of the case 110, the second area 162 may be seated on an upper portion of the second gasket 116. Thereafter, the crimping part 114 of the case 110 may be bent to the inside of the cap plate 160 to press the second gasket 116, thereby coupling the cap plate 160 to the case 110. The second gasket 116 may be in close contact between the case 110 and the cap plate 160. In one or more embodiments, the second gasket 116 may be in close contact with the beading part 113 inside the crimping part 114. An end of the second gasket 116 located between the cap plate 160 and the crimping part 114 may extend further into the case 110 than an end of the crimping part 114, and may be exposed to the outside. The end of the second gasket 116 located between the cap plate 160 and the beading part 113 may protrude toward the inside of the case 110 further than the beading part 113. The second gasket 116 may be made of a resin material, such as polyethylene (PE), polypropylene (PP), polyethylene terephthalate (PET), or the like.

The cap plate 160 may include a vent 165 provided in the first area 161, and that may be opened by a sufficient amount of pressure (e.g., a set pressure). The vent 165 may have a thickness that is thinner than other areas of the cap plate 160. The vent 165 may be a notch provided in a downward direction from the top surface of the cap plate 160. The vent 165 may be located on a portion adjacent to the third area 163 on the first area 161. In some examples, the vent 165 may be provided in the form of a continuous notch, and may have a circular shape. In some examples, the vent 165 may be provided in the form of notches spaced apart from each other.

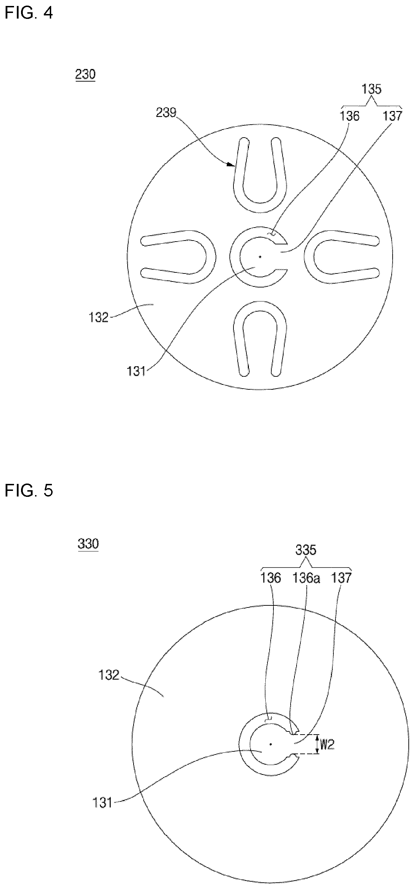

FIGS. 4 to 9 illustrate plan views of a positive electrode collector plate according to various embodiments.

Referring to FIG. 4, a positive electrode collector plate 230 may include a terminal connection part 131, an electrode plate connection part 132, a fuse part 135, and a cutoff part 239. The cutoff part 239 may be located outside the fuse part 135. The cutoff part 239 may be provided in plurality to be located in multiple directions (e.g., up/down/left/right directions in the plan view) from the fuse part 135. The cutoff part 239 may be provided in an approximate 'U' shape or a horseshoe shape. An inner region of the cutoff part 239 may be spaced apart from the positive electrode collector plate 230, and may move vertically at an interval (e.g., a predetermined interval). Thus, the cutoff part 239 may apply elasticity to the electrode assembly 120, and may absorb an impact applied to the secondary battery 100 to secure fluidity of the electrode assembly 120.

Referring to FIG. 5, a positive electrode collector plate 330 may include a terminal connection part 131, an electrode plate connection part 132, and a fuse part 335. The fuse part 335 may include a fuse hole 136, a connection part 137, and a protrusion hole 136a. The protrusion hole 136a may be defined in each of the two ends of the fuse hole 136. The protrusion holes 136a defined at both ends of the fuse hole 136 may protrude to be close to each other. A width of the protrusion hole 136a may be less than that of the fuse hole 136. The protrusion hole 136a may reduce a width W2 of the connection part 137, that is, a cross-sectional area through which current flows to improve a function of the fuse part 335.

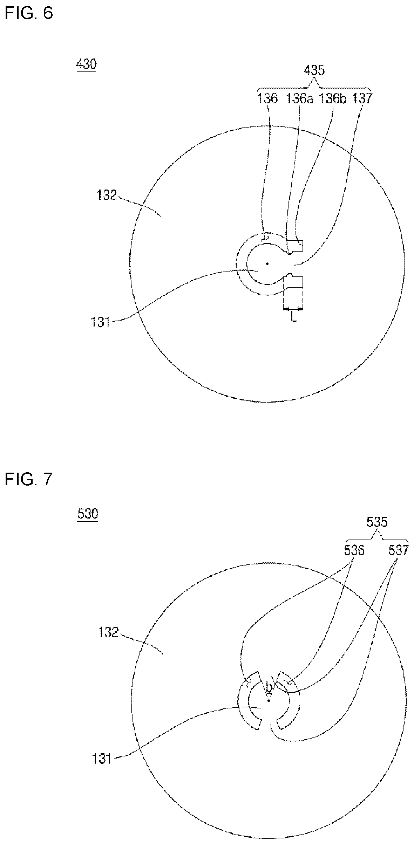

Referring to FIG. 6, a positive electrode collector plate 430 may include a terminal connection part 131, an electrode plate connection part 132, and a fuse part 435. The fuse part 435 may include a fuse hole 136, a connection part 137, a protrusion hole 136a, and an extension hole 136b. The extension hole 136b may extend from each of the two ends of the fuse hole 136 toward the outside of the positive electrode collector plate 430. The extension holes 136b defined at both ends of the fuse hole 136 may be parallel to each other. Each of the extension holes 136b may allow the connection part 137 to increase in length L of the connection part 137, that is, a length by which current flows, thereby improving the function of the fuse part 435.

Referring to FIG. 7, a positive electrode collector plate 530 may include a terminal connection part 131, an electrode plate connection part 132, and a fuse part 535. The fuse part 535 may include two fuse holes 536 spaced apart from each other, and two connection parts 537 located between the fuse holes 536. The two fuse holes 536 may be concentrically located with respect to a center of the positive electrode collector plate 530, and may be symmetrical to each other. An angle "b" angled by the connection part 537 with respect to a center of the positive electrode collector plate 530 may be about 46 degrees.

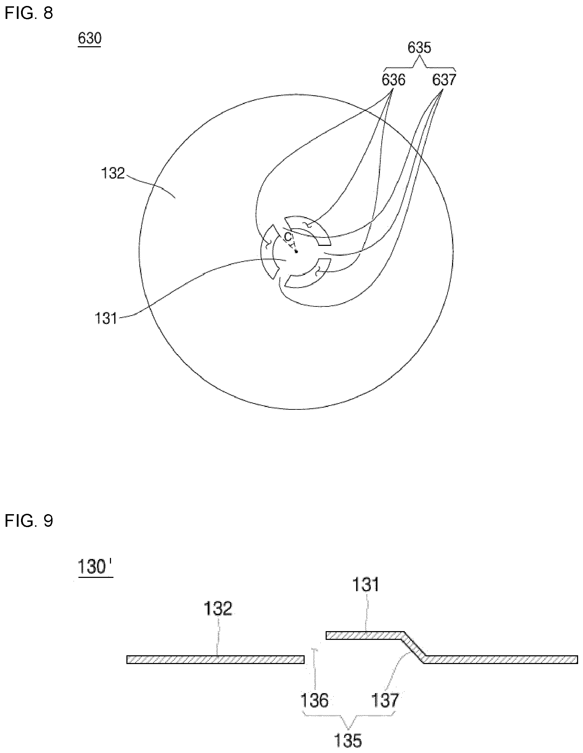

Referring to FIG. 8, a positive electrode collector plate 630 may include a terminal connection part 131, an electrode plate connection part 132, and a fuse part 635. The fuse part 635 may include three fuse holes 636 spaced apart from each other, and three connection parts 637 located between respective ones of the fuse holes 636. The three fuse holes 636 may be concentrically located with respect to a center of the positive electrode collector plate 630, and may have the same size. An angle "c" angled by the connection part 637 with respect to a center of the positive electrode collector plate 630 may be about 11 degrees.

Referring to FIG. 9, a positive electrode collector plate 130' includes a terminal connection part 131, an electrode plate connection part 132, and a fuse part 135. The terminal connection part 131 may protrude upwardly from the electrode plate connection part 132. In one or more embodiments, the terminal connection part 131 and the electrode plate connection part 132 may be located on different planes. In one or more embodiments, the connection part 137 connecting the terminal connection part 131 to the electrode plate connection part 132 may be provided to be inclined or bent.

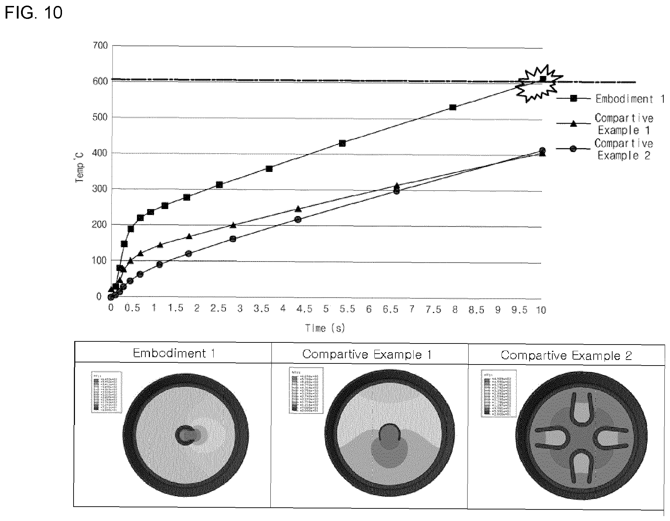

FIG. 10 illustrates a graph showing results of a short circuit simulation of external resistance (5 mΩ) of a positive electrode collector plate according to one or more embodiments. Embodiment(s) 1 may relate to a positive electrode collector plate 130 in which a connection part has a width of about 4 mm, and which is illustrated in FIG. 3A. Comparative Example 1 may relate to a positive electrode collector plate in which a connection part has a width of about 7 mm. Comparative Example 2 relates to a positive electrode collector plate in which only a cutoff part is provided without a fuse part. In one or more embodiments, a melting temperature of the positive electrode collector may be about 600 °C to about 660 °C.

As illustrated in FIG. 10, in Embodiment(s) 1 according to the present disclosure, it may be seen that, because a temperature of the connection part 137 reaches about 600°C in about 10 seconds after short circuit occurs, and thus, the connection part 137 is melted and cut, current in the secondary battery 100 is cut off.

In one or more embodiments, in Comparative Example 1, if compared to Embodiment(s) 1, it may be seen that, because a temperature of a connection part stays around about 400 °C during the same time period, and a width of the connection part is relatively wide, and thus, current density is low, it is difficult to cut the connection part. In one or more embodiments, in Comparative Example 2, it may be seen that, because a fuse part is not provided, only an overall temperature of a positive collector plate increases, and a fuse function of cutting off current is not provided.

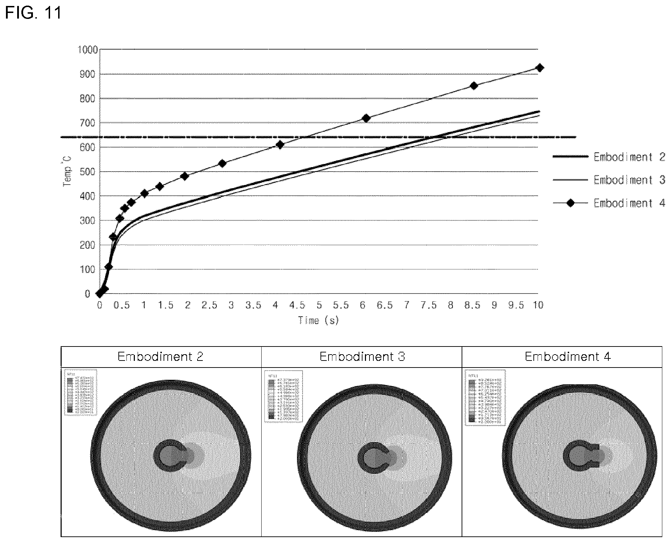

FIG. 11 illustrates a graph showing results of a short circuit simulation of external resistance (5 mΩ) of a positive electrode collector plate according to various embodiments. Embodiment(s) 2 may relate to a positive electrode collector plate 130 in which a connection part has a width of about 3.5 mm and which is illustrated in FIG. 3A. Embodiment(s) 3 may relate to a positive electrode collector plate 330 in which a protrusion hole 136a is defined, and thus a connection part 137 has a width of about 3 mm and which is illustrated in FIG. 5. Embodiment(s) 4 may relate to a positive electrode collector plate 430 in which a protrusion hole 136a is defined, and thus, a connection part 137 has a width of about 3 mm, and which has an extension hole 136b and is illustrated in FIG. 6.

As illustrated in FIG. 11, in the positive electrode collector plate 130 of Embodiment(s) 2 and the positive electrode collector plate 330 of Embodiment(s) 3, it may be seen that, because a temperature of the connection part reaches about 600 °C after about 8 seconds after occurrence of short circuit so that the connection part 137 is melted and cut, current flowing in the secondary battery is capable of being cut off. In the positive electrode collector plate 430 of Embodiment(s) 4, it may be seen that, because a temperature of a connection part reaches about 600 °C in about 5 seconds after short circuit occurs so that the connection part 137 is melted and cut, current flowing in the secondary battery is capable of being cut off. In one or more embodiments, as results of the simulations of FIGS. 10 and 11, it may be seen that the shorter a width W2 of the connection part 137 and the longer a length L of the connection part 137, the faster the short circuit occurs.

The secondary battery according to the embodiments of the present disclosure may include the terminal connection part, to which the rivet terminal is connected, the electrode plate connection part, to which the electrode assembly is connected, and the fuse part interposed between the terminal connection part and the electrode plate connection part and defining the fuse hole and the connection part. Thus, if the short circuit or the overcurrent occurs, the connection part may be melted or cut to cut off the current, thereby improving the safety of the secondary battery.

The above-mentioned embodiments are merely examples of the cylindrical secondary battery, and thus, the present disclosure is not limited to the foregoing embodiments, and also it will be understood by those of ordinary skill in the art that various changes in form and details may be made therein without departing from the scope of the present disclosure as defined by the following claims, with functional equivalents thereof to be included therein.

The present invention can be defined by reference to the following clauses:
Clause 1. A battery comprising:
   an electrode assembly comprising a positive electrode plate, a separator, and a negative electrode plate;
   a case accommodating the electrode assembly, and electrically connected to the negative electrode plate;
   a rivet terminal electrically connected to the positive electrode plate, and embedded in a bottom surface of the case;
   a cap plate sealing an upper portion of the case; and
   a positive electrode collector plate below the electrode assembly, and comprising a terminal connection part connected to the rivet terminal, an electrode
   plate connection part connected to the positive electrode plate, and a fuse part between the terminal connection part and the electrode plate connection part.
Clause 2. The battery as claimed in clause 1, wherein the fuse part defines a fuse hole along a portion of an outer circumference of the terminal connection part, and comprises a connection part electrically connecting the terminal connection part to the electrode plate connection part.
Clause 3. The battery as claimed in clause 2, wherein the connection part has a width of about 3 mm to about 5 mm.
Clause 4. The battery as claimed in clause 2 or clause 3, wherein the fuse hole has a width of about 1 mm to about 4 mm.
Clause 5. The battery as claimed in any one of clauses 2 to 4, wherein an angle of the connection part with respect to a center of the positive electrode collector plate is between about 60 degrees to about 100 degrees.
Clause 6. The battery as claimed in any one of clauses 1 to 5, wherein a ratio of a radius of the terminal connection part to a radius of the positive electrode collector plate is between about 1/7 to about 1/5.
Clause 7. The battery as claimed in any one of clauses 1 to 6, wherein the positive electrode collector plate defines a cutoff part outside the fuse part and having a horseshoe shape.
Clause 8. The battery as claimed in any one of clauses 2 to 7, wherein the fuse part further defines a protrusion hole at each end of the fuse hole, the protrusion holes protruding toward each other.
Clause 9. The battery as claimed in any one of clauses 2 to 8, wherein the fuse part further defines an extension hole extending from each end of the fuse hole toward an outside of the positive electrode collector plate, the extension holes extending substantially in parallel.
Clause 10. The battery as claimed in clause 1, wherein the fuse part defines one or more fuse holes, concentrically located with respect to a center of the positive electrode collector plate.
Clause 11. The battery as claimed in any one of clauses 1 to 10, wherein the terminal connection part has a thickness that is greater than a thickness of the electrode plate connection part.
Clause 12. The battery as claimed in clause 1, wherein the terminal connection part protrudes upwardly from the electrode plate connection part.
Clause 13. The battery as claimed in clause 12, wherein the fuse part defines a fuse hole along a portion of an outer circumference of the terminal connection part, and comprises a connection part that is inclined, and that electrically connects the terminal connection part to the electrode plate connection part.
Clause 14. The battery as claimed in any one of clauses 1 to 13, wherein the rivet terminal comprises:
   a head below a bottom part of the case; and
   a coupling part extending from a center of the head toward an interior of the case.
Clause 15. The battery as claimed in clause 14, wherein the coupling part is welded to the terminal connection part.
Clause 16. The battery as claimed in clause 14 or clause 15, wherein the bottom part of the case defines a terminal hole through which the rivet terminal passes,
   wherein an upper end of the coupling part has a diameter that is greater than a diameter of the terminal hole, and
   wherein a lower end of the coupling part has a diameter that is less than the diameter of the terminal hole.
Clause 17. The battery as claimed in clause 16, further comprising a first gasket between the coupling part and the bottom part of the case at the terminal hole.
Clause 18. The battery as claimed in clause 17, wherein a lower end of the first gasket extends between the bottom part of the case and the head.
Clause 19. The battery as claimed in clause 16, further comprising an insulation member between the head and the bottom part of the case.
Clause 20. The battery as claimed in clause 19, further comprising a first gasket between the coupling part and the bottom part of the case at the terminal hole,
   wherein the insulation member contacts an outer circumference of the first gasket.
Clause 21. The battery as claimed in clause 19 or clause 20, wherein an outer circumference of the insulation member extends beyond a perimeter of the head.
Clause 22. The battery as claimed in any one of clauses 1 to 21, wherein the case further comprises:
   a beading part recessed from a lower portion of the cap plate toward an interior of the case; and
   a crimping part bent from an upper portion of the cap plate toward the interior of the case.
Clause 23. The battery as claimed in clause 22, wherein the cap plate comprises:
   a first area above the electrode assembly;
   a second area outside the first area, and protruding upwardly further than the first area; and
   a third area that is inclined, and that connects the first area to the second area.
Clause 24. The battery as claimed in clause 23, wherein a vent is provided in the first area.
Clause 25. The battery as claimed in clause 23 or clause 24, wherein the second area is between the beading part and the crimping part.
Clause 26. The battery as claimed in any one of clauses 23 to 25, further comprising a second gasket between the second area and the case, and contacting an inside of the beading part and the crimping part.
Clause 27. The battery as claimed in clause 26, wherein an end of the second gasket between the cap plate and the crimping part extends toward the interior of the case further than an end of the crimping part.
Clause 28. The battery as claimed in clause 26 or clause 27, wherein an end of the second gasket between the cap plate and the beading part protrudes toward the interior of the case further than the beading part.
Clause 29. The battery as claimed in any one of clauses 22 to 28, further comprising a negative electrode collector plate above the electrode assembly, and comprising a planar part to which the negative electrode plate is connected, and an extension part bent upwardly from the planar part.
Clause 30. The battery as claimed in clause 29, wherein the extension part is electrically connected to the beading part.
Clause 31. The battery as claimed in clause 29 or clause 30, wherein the planar part defines a through-hole.

## Claims

1. A battery comprising:
an electrode assembly comprising a positive electrode plate, a separator, and a negative electrode plate;
a case accommodating the electrode assembly, and electrically connected to the negative electrode plate;
a rivet terminal electrically connected to the positive electrode plate, and embedded in a bottom surface of the case;
a cap plate sealing an upper portion of the case; and
a positive electrode collector plate below the electrode assembly, and comprising a terminal connection part connected to the rivet terminal, an electrode plate connection part connected to the positive electrode plate, and a fuse part between the terminal connection part and the electrode plate connection part.

2. The battery as claimed in claim 1, wherein the fuse part defines a fuse hole along a portion of an outer circumference of the terminal connection part, and comprises a connection part electrically connecting the terminal connection part to the electrode plate connection part.

3. The battery as claimed in claim 2, wherein the connection part has a width of about 3 mm to about 5 mm.

4. The battery as claimed in claim 2 or claim 3, wherein the fuse hole has a width of about 1 mm to about 4 mm.

5. The battery as claimed in any one of claims 2 to 4, wherein an angle of the connection part with respect to a center of the positive electrode collector plate is between about 60 degrees to about 100 degrees.

6. The battery as claimed in any one of claims 1 to 5, wherein:
(i) a ratio of a radius of the terminal connection part to a radius of the positive electrode collector plate is between about 1/7 to about 1/5; and/or
(ii) the positive electrode collector plate defines a cutoff part outside the fuse part and having a horseshoe shape.

7. The battery as claimed in any one of claims 2 to 6, wherein:
(i) the fuse part further defines a protrusion hole at each end of the fuse hole, the protrusion holes protruding toward each other; and/or
(ii) the fuse part further defines an extension hole extending from each end of the fuse hole toward an outside of the positive electrode collector plate, the extension holes extending substantially in parallel.

8. The battery as claimed in claim 1, wherein the fuse part defines one or more fuse holes, concentrically located with respect to a center of the positive electrode collector plate.

9. The battery as claimed in any one of claims 1 to 8, wherein the terminal connection part has a thickness that is greater than a thickness of the electrode plate connection part.

10. The battery as claimed in claim 1, wherein the terminal connection part protrudes upwardly from the electrode plate connection part, optionally wherein the fuse part defines a fuse hole along a portion of an outer circumference of the terminal connection part, and comprises a connection part that is inclined, and that electrically connects the terminal connection part to the electrode plate connection part.

11. The battery as claimed in any one of claims 1 to 10, wherein the rivet terminal comprises:
a head below a bottom part of the case; and
a coupling part extending from a center of the head toward an interior of the case, optionally wherein the coupling part is welded to the terminal connection part.

12. The battery as claimed in claim 11, wherein the bottom part of the case defines a terminal hole through which the rivet terminal passes,
wherein an upper end of the coupling part has a diameter that is greater than a diameter of the terminal hole, and
wherein a lower end of the coupling part has a diameter that is less than the diameter of the terminal hole.

13. The battery as claimed in claim 12, further comprising a first gasket between the coupling part and the bottom part of the case at the terminal hole, optionally wherein a lower end of the first gasket extends between the bottom part of the case and the head.

14. The battery as claimed in claim 12, further comprising an insulation member between the head and the bottom part of the case.

15. The battery as claimed in claim 14, wherein:
(i) the battery further comprises a first gasket between the coupling part and the bottom part of the case at the terminal hole,
wherein the insulation member contacts an outer circumference of the first gasket; and/or
(ii) an outer circumference of the insulation member extends beyond a perimeter of the head.

16. The battery as claimed in any one of claims 1 to 15, wherein the case further comprises:
a beading part recessed from a lower portion of the cap plate toward an interior of the case; and
a crimping part bent from an upper portion of the cap plate toward the interior of the case.

17. The battery as claimed in claim 16, wherein the cap plate comprises:
a first area above the electrode assembly;
a second area outside the first area, and protruding upwardly further than the first area; and
a third area that is inclined, and that connects the first area to the second area.

18. The battery as claimed in claim 17, wherein:
(i) a vent is provided in the first area; and/or
(ii) the second area is between the beading part and the crimping part.

19. The battery as claimed in claim 17 or claim 18, further comprising a second gasket between the second area and the case, and contacting an inside of the beading part and the crimping part.

20. The battery as claimed in claim 19, wherein:
(i) an end of the second gasket between the cap plate and the crimping part extends toward the interior of the case further than an end of the crimping part; and/or
(ii) an end of the second gasket between the cap plate and the beading part protrudes toward the interior of the case further than the beading part.

21. The battery as claimed in any one of claims 16 to 20, further comprising a negative electrode collector plate above the electrode assembly, and comprising a planar part to which the negative electrode plate is connected, and an extension part bent upwardly from the planar part.

22. The battery as claimed in claim 21, wherein:
(i) the extension part is electrically connected to the beading part; and/or
(ii) the planar part defines a through-hole.
